# EUROPEAN PATENT SPECIFICATION

(11) **EP 3 318 367 B1**
(45) Date of publication and mention of the grant of the patent: **07.04.2021**
(21) Application number: 16817627.9
(22) Date of filing: 02.06.2016
(51) Int. Cl.: B25F 5/02, B25G 3/00

(54) **WORKING MACHINE**
ARBEITSMASCHINE
MACHINE DE TRAVAIL

(30) Priority: 30.06.2015 JP 2015131468
(43) Date of publication of application: 09.05.2018
(73) Proprietor: Koki Holdings Co., Ltd., Tokyo 108-6020 (JP)
(72) Inventor: HIRANO, Shota, Hitachinaka-City Ibaraki 312-8502 (JP); HANAWA, Hiroyuki, Hitachinaka-City Ibaraki 312-8502 (JP); SAITOU, Keita, Hitachinaka-City Ibaraki 312-8502 (JP); SATO, Naoki, Hitachinaka-City Ibaraki 312-8502 (JP)
(74) Representative: Parker, Andrew James
(86) International application number: PCT/JP2016/066414
(87) International publication number: WO 2017/002518

(56) References cited:
- JP-A- S62 218 082
- JP-A- 2010 129 188
- JP-Y1- S 424 960
- US-A1- 2014 251 650
- US-B2- 6 725 491
- US-B2- 6 810 547

## Description

### TECHNICAL FIELD

The present invention relates to a working machine that rotates a working tool by motive power of a motor.

### BACKGROUND ART

Conventionally, working machines that rotate a working tool by motive power of a motor have been known, and an example of the working machines is described in Patent Document 1. The working machine described in Patent Document 1 includes a main body and a handle serving as a holding tool attached to the main body. The main body includes a housing that houses a motor and a grip continuous with the housing.

Further, the working machine described in Patent Document 1 includes a holder for attaching and detaching the handle to and from the main body. The holder has a ring shape with a cutout portion, and the handle is fixed to the holder with a bolt and a nut. The ring-shaped holder is attached to an outer peripheral surface of the housing. A through hole is provided in the holder, and a shaft portion of the bolt is disposed in the through hole. The handle has a cylindrical shape, and a nut is provided in the handle. In the working machine described in Patent Document 1, the handle can be attached to and detached from the main body by rotating the bolt.
In addition, the handheld grinder described in Patent Document 2 is described as including a head portion, a grip, and a projection provided to the grip. The projection is engaged with the head portion.

Furthermore, the handheld machine tool described in Patent Document 3 includes a casing, a grip, a hole provided in the casing, and a shaft provided to the grip. The shaft is fixed to the hole of the casing.

Still furthermore, the power tool described in Patent Document 4 includes a main body portion, a female thread part provided to the main body portion, an auxiliary grip portion, a rod member fixed to the auxiliary grip portion, a bracket fixed to the rod member, a projection provided to the bracket, a hole provided in the projection, and a screw member inserted into the hole and fixed to the female thread part.

### RELATED ART DOCUMENTS

### PATENT DOCUMENTS

Patent Document 1: Japanese Patent Application Laid-Open Publication No. 2012-96299
Patent Document 2: Japanese Utility Model Publication No. S42-4960
Patent Document 3: Japanese Patent Application Laid-Open Publication No. S62-218082
Patent Document 4: US Patent Application Publication No. 2014/0251650

### SUMMARY OF THE INVENTION

### PROBLEM TO BE SOLVED BY THE INVENTION

However, the working machine described in Patent Document 1 uses a holder dedicated for attaching the holding tool to the main body, and it causes a problem of an increase in size of the working machine. In addition, since the holder is used, attachment of the holding tool is troublesome.

An object of the present invention is to provide a working machine capable of suppressing an increase in size. Further, another object of the present invention is to provide a working machine that enables easy attachment of a holding tool.

### MEANS FOR SOLVING THE PROBLEMS

A working machine according to an embodiment is a working machine that includes the features of claim 1.

### EFFECTS OF THE INVENTION

In the present invention, a holding tool is disposed in an attaching hole of a case, so that the holding tool is fixed to a main body. Therefore, an increase in size of the working machine can be suppressed. Further, the holding tool can be easily attached to the working machine.

### BRIEF DESCRIPTION OF THE DRAWINGS

FIG. 1 is a perspective view showing a state where a working machine of the present invention is assembled;
FIG. 2 is a front view of the working machine of FIG. 1;
FIG. 3 is a side sectional view showing an internal structure of the working machine of FIG. 1;
FIG. 4 is a side sectional view showing a grip of the working machine of FIG. 1;
FIG. 5 is a front sectional view showing an example of attaching a holding tool to the working machine of FIG. 1;
FIG. 6 is a front sectional view showing the holding tool in a disassembled state;
FIG. 7 is a perspective view showing the holding tool in a disassembled state;
FIG. 8(A) is a plan view of a cap attached to the working machine, and FIG. 8(B) is a side view of the cap;
FIG. 9(A) is a side view showing a state where a plug of the cap is pulled out of an attaching hole, and FIG. 9(B) is a perspective view of the cap alone;
FIGs. 10(A) to 10(C) are front sectional views showing a process of detaching the cap and attaching the holding tool to a front case;
FIG. 11(A) is a side view of a mount member attached to the working machine of FIG. 1, and FIG. 11(B) is a side sectional view of the mount member;
FIG. 12 is a front sectional view showing an example of attaching the holding tool to the front case;
FIG. 13(A) is a front sectional view showing an example of attaching the holding tool to the front case, and FIG. 13(B) is a side view of the mount member shown in FIG. 13(A);
FIG. 14 (A) is a side view showing an example of attaching the holding tool to a mounting portion, and FIG. 14(B) is a side view of the mounting portion to which the holding tool is attachable; and
FIGs. 15(A) and 15(B) are sectional views taken along a line E-E in FIG. 14(A).

### DETAILED DESCRIPTION OF PREFERRED EMBODIMENTS

Hereinafter, embodiments of a working machine according to the present invention will be described in detail with reference to the drawings.

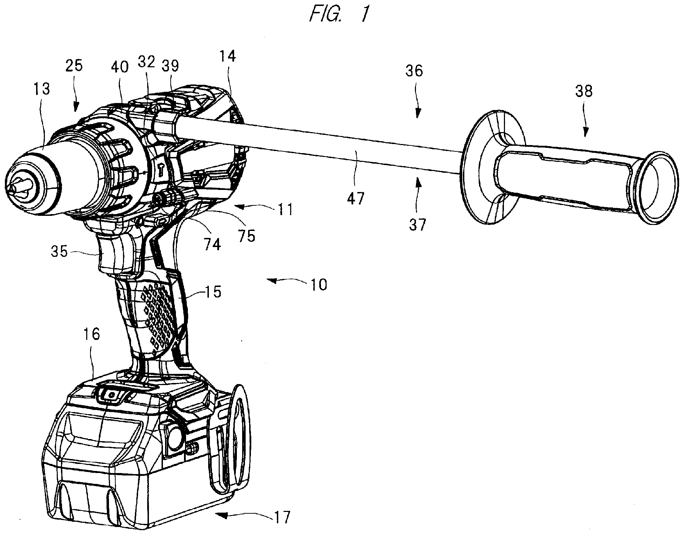

A working machine 10 shown in FIGs. 1 to 3 includes a main body 11, an electric motor 12 provided in the main body 11, and a chuck 13 which is disposed outside the main body 11 and to which a torque of the electric motor 12 is transmitted. A driver bit or a drill bit as a working tool can be attached to and detached from the chuck 13. The main body 11 includes a housing 14 and a grip 15 continuous with the housing 14. The grip 15 is provided for a worker to grasp the working machine 10. A mounting portion 16 is provided at an end of the grip 15 on an opposite side of the housing 14, and a battery pack 17 can be attached to or detached from the mounting portion 16.

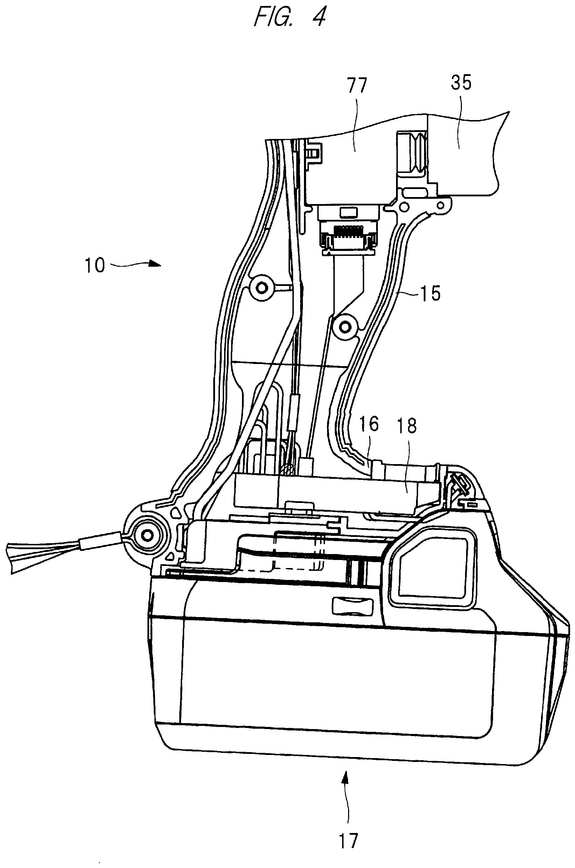

The battery pack 17 is a case in which battery cells are housed. As the battery cell, a lithium ion battery, a nickel hydrogen battery, a lithium ion polymer battery, a nickel cadmium battery, or the like can be used. As shown in FIG. 4, a control unit 18 is provided in the mounting portion 16, and the control unit 18 controls the magnitude of a voltage and a current to be applied to the electric motor 12 from the battery pack 17. By this control, a rotating direction, the number of rotations, and the torque of a rotary shaft 20 of the electric motor 12 are controlled.

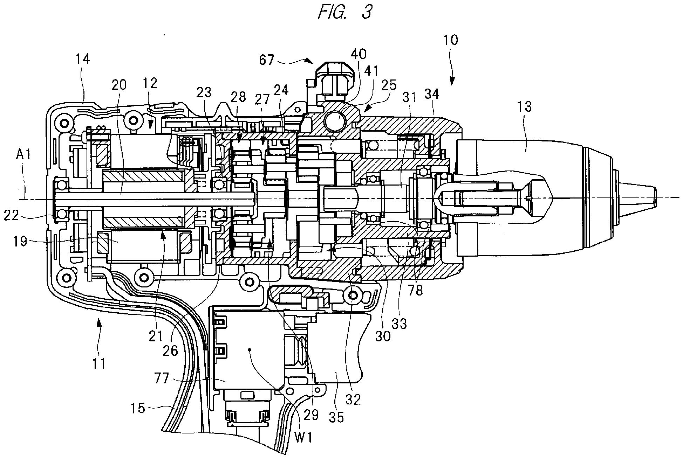

The electric motor 12 is a power device that converts electric power into motive power. As shown in FIG. 3, the electric motor 12 includes a stator 19 fixed to the housing 14 and a rotor 21 rotatably provided in the housing 14. The stator 19 includes a coil to which a voltage is applied, and the rotor 21 includes a permanent magnet. The rotor 21 is fixed to the rotary shaft 20, and two bearings 22 and 23 that rotatably support the rotary shaft 20 are provided in the housing 14. The rotation center of the rotary shaft 20 is an axis A1.

A rear case 24 is provided in the housing 14, and a front case 25 exposed outside the housing 14 is provided. The rear case 24 is disposed between the electric motor 12 and the front case 25 in a direction along the axis A1. A partition wall 26 is provided in the housing 14 and is disposed between the electric motor 12 and the rear case 24 in the direction along the axis A1. The partition wall 26 supports the bearing 23.

The front case 25 and the rear case 24 are not rotated with respect to the housing 14. The front case 25 is fixed to the housing 14 with screw members 74. Both the front case 25 and the rear case 24 have a cylindrical shape. The rear case 24 and the front case 25 are made of metal such as aluminum, and the rigidity of each of the rear case 24 and the front case 25 is higher than the rigidity of the housing 14. A gearbox 27 is disposed across an inside of the front case 25 and an inside of the rear case 24. Note that the rear case 24 and the front case 25 may be formed of the same resin as the housing 14 as long as the rigidity can be secured.

The gearbox 27 includes a first planetary gear mechanism 28, a second planetary gear mechanism 29, and a third planetary gear mechanism 30. The first planetary gear mechanism 28 and the second planetary gear mechanism 29 are disposed in the rear case 24. The third planetary gear mechanism 30 is disposed in the front case 25. The first planetary gear mechanism 28, the second planetary gear mechanism 29, and the third planetary gear mechanism 30 include an input element, a reaction element, and an output element, respectively. The rotary shaft 20 is coupled to the input element of the first planetary gear mechanism 28. The output element of the third planetary gear mechanism 30 is coupled to a spindle 31, and the chuck 13 is attached to the spindle 31.

Two bearings 78 that rotatably support the spindle 31 are provided in the front case 25. Namely, the main body 11 supports the spindle 31 and the chuck 13 via the front case 25 and the bearings 78. The gearbox 27 is a transmission mechanism that transmits a rotational force of the electric motor 12 to the spindle 31, and the gearbox 27 changes a ratio between the number of rotations of the rotary shaft 20 and the number of rotations of the spindle 31.

The motive power transmitted from the electric motor 12 to the first planetary gear mechanism 28 is transmitted to the spindle 31 through the second planetary gear mechanism 29 and the third planetary gear mechanism 30. When the power is transmitted from the second planetary gear mechanism 29 to the spindle 31 through the third planetary gear mechanism 30, the reaction element of the third planetary gear mechanism 30, for example, a ring gear bears a reaction torque thereof.

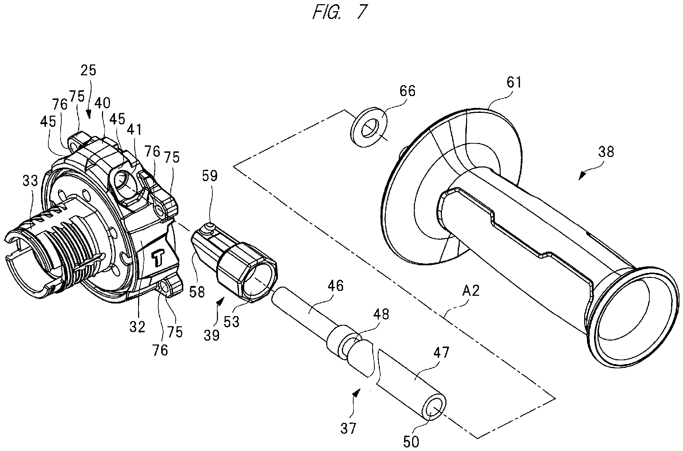

The front case 25 includes a first cylindrical portion 32 and a second cylindrical portion 33. As shown in FIG. 7, a plurality of boss portions 75 protruding from an outer peripheral surface of the first cylindrical portion 32 are provided, and holes 76 are respectively provided in the plurality of boss portions 75. The screw members 74 are respectively inserted into the plurality of holes 76. An outer diameter of the first cylindrical portion 32 is larger than an outer diameter of the second cylindrical portion 33. The third planetary gear mechanism 30 is disposed in the first cylindrical portion 32, and the spindle 31 is disposed across an inside of the first cylindrical portion 32 and an inside of the second cylindrical portion 33. A clutch dial 34 is attached to the front case 25. The clutch dial 34 is rotatable with respect to the front case 25.

The reaction element of the third planetary gear mechanism 30 is rotatably provided with respect to the front case 25, and it is also possible to fix the reaction element to the front case 25. Namely, the front case 25 supports the third planetary gear mechanism 30 located most downstream in a power transmission path from the electric motor 12 to the spindle 31. When the clutch dial 34 is operated, the rotation speed of the reaction element of the third planetary gear mechanism 30 is adjusted, and the torque output from the spindle 31 can be adjusted.

Next, an example of use of the working machine 10 will be described. A selector switch for switching the rotating direction of the rotary shaft 20 of the electric motor 12 between forward rotation and reverse rotation is provided in the main body 11. The selector switch is operated by the worker, and an operation signal of the selector switch is input to the control unit 18. The control unit 18 changes the direction of the current to be supplied to the coil of the electric motor 12, thereby switching the rotating direction of the rotary shaft 20.

In addition, a trigger 35 is provided on the grip 15, and a trigger switch 77 is provided in the grip 15. The trigger switch 77 is disposed between the housing 14 and the mounting portion 16 in a direction of a straight line A3. When the worker operates the trigger 35, the trigger switch 77 is turned on or off, and a signal output from the trigger switch 77 is input to the control unit 18. The control unit 18 outputs a control signal for connecting or disconnecting a path for supplying a current to the stator 19 of the electric motor 12.

A moment about the axis A1 is generated with respect to the housing 14 during an operation to rotate the working tool by driving the electric motor 12. The working machine 10 includes a holding tool 36 shown in FIGs. 1, 2, and 5 to 7. The holding tool 36 is provided for suppressing the main body 11 from vibrating in a direction of rotation about the axis A1. The vibration of the main body 11 indicates rotation about the axis A1. The holding tool 36 includes a joint 37 and a handle 38. Further, the working machine 10 includes a mount member 39. The mount member 39 supports the holding tool 36 attached to the main body 11. A first end portion of the joint 37 is attached to the front case 25, the mount member 39 supports the joint 37, and the handle 38 is attached to a second end portion of the joint 37.

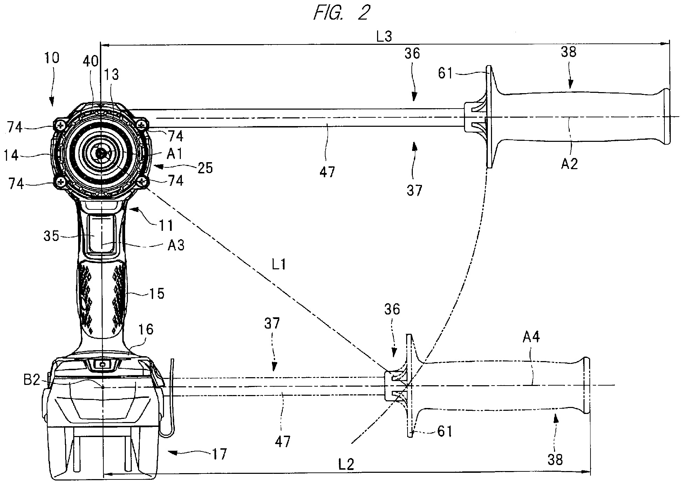

In FIG. 2 in which the working machine 10 is viewed from the front, a fixing portion 40 is provided at a position of the front case 25 on a side opposite to a position of the grip 15 in a circumferential direction of the front case 25. The position where the fixing portion 40 is provided is located on an opposite side of the position where the grip 15 is disposed across the axis A1. The fixing portion 40 has an attaching hole 41 penetrating in a plane direction perpendicular to the axis A1. The attaching hole 41 is disposed on an outer side relative to the third planetary gear mechanism 30 in a radial direction about the axis A1. An internal thread 42 is formed in an inner surface of the attaching hole 41. The fixing portion 40 has recessed portions 43 and 44 connected to the attaching hole 41, on both sides of the attaching hole 41 in a direction of a center line A2.

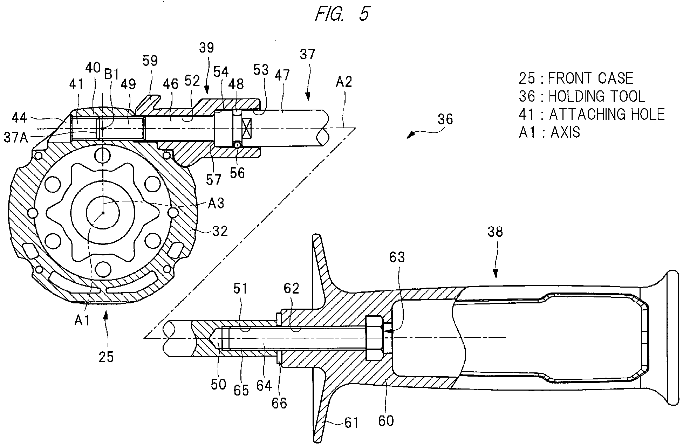

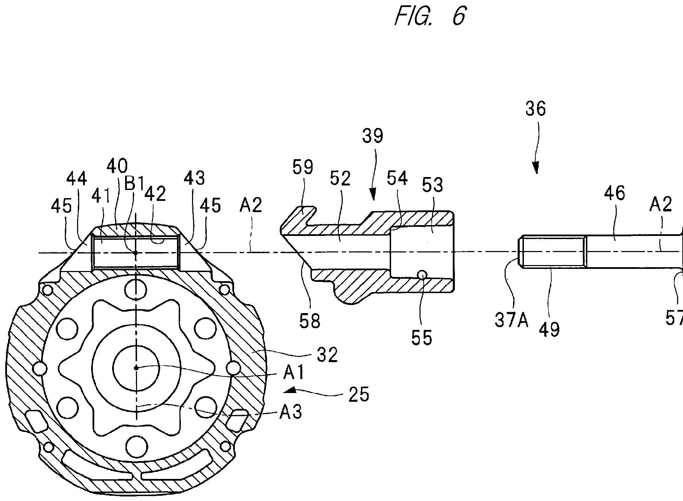

In addition, as shown in FIGs. 6 and 7, the fixing portion 40 is provided with contact surfaces 45 that respectively surround the two recessed portions 43 and 44. The two contact surfaces 45 are flat and inclined with respect to a straight line A3 that passes through the axis A1. The straight line A3 passes through the center of the grip 15 and the axis A1 in FIG. 2 that is a plan view of the working machine 10. Namely, the grip 15 protrudes in a direction of the straight line A3 from the housing 14 in the front view of the working machine 10. Further, as shown in FIGs. 5 and 6, an intersection B1 of the center line A2 and the straight line A3 corresponds to the center of the attaching hole 41 in the direction of the center line A2. The two contact surfaces 45 are inclined in a direction in which an interval in the direction of the center line A2 becomes narrower as the two contact surfaces 45 are spaced away from the straight line A1. Namely, the two contact surfaces 45 are inclined in opposite directions with respect to the straight line A3.

The joint 37 is a shaft connecting the handle 38 and the front case 25, and is made of a metal material, for example, a steel material. The joint 37 is made up of a first shaft portion 46 and a second shaft portion 47 disposed in series in the direction of the center line A2, and an outer diameter of the first shaft portion 46 is smaller than an outer diameter of the second shaft portion 47. An annular groove 48 is provided in an outer periphery of the second shaft portion 47. The first shaft portion 46 is inserted into the attaching hole 41, and an external thread 49 is formed in an outer peripheral surface of the first shaft portion 46. The first shaft portion 46 is screwed into the attaching hole 41, so that the joint 37 is fixed to the front case 25. The joint 37 is disposed across an inside to an outside of the attaching hole 41. A range of the first shaft portion 46 having the external thread 49 formed in the direction of the center line A2 is shorter than a length of the attaching hole 41 in the direction of the center line A2. In a state where the external thread 49 is screwed in the internal thread 42 of the attaching hole 41, a part of the first shaft portion 46 is located outside the attaching hole 41 and the recessed portion 43. In the joint 37, a fixing hole 50 is provided at an end portion on a side opposite to the first shaft portion 46. An internal thread 51 is formed in an inner peripheral surface of the fixing hole 50. The mount member 39 is integrally formed of a synthetic resin. The mount member 39 has a cylindrical shape and has a first support hole 52 and a second support hole 53. An inner diameter of the first support hole 52 is smaller than an inner diameter of the second support hole 53. The inner diameter of the first support hole 52 is constant in the direction of the center line A2 and the inner diameter of the second support hole 53 is constant in the direction of the center line A2. Namely, no internal thread is provided in inner surfaces of the first support hole 52 and the second support hole 53.

A stepped portion 54 continuous with the inner surface of the first support hole 52 and the inner surface of the second support hole 53 is provided. The stepped portion 54 is annularly formed about the center line A2 and is a flat surface perpendicular to the center line A2. Further, in a state where the first shaft portion 46 is disposed in the first support hole 52 and the second shaft portion 47 is disposed in the second support hole 53, the external thread 49 of the first shaft portion 46 is disposed outside the first support hole 52.

In addition, a hole 55 penetrating a position of the mount member 39 corresponding to the second support hole 53 in the radial direction is provided, and a retainer 56 is inserted in the hole 55. The retainer 56 is disposed in the groove 48 in the direction of the center line A2 and is engaged with the second shaft portion 47, so that the mount member 39 and the joint 37 are positioned in the direction of the center line A2. When the external thread 49 of the joint 37 is screwed into the internal thread 42 of the fixing portion 40 and tightening is completed, the holding tool 36 is positioned and fixed to the front case 25 as shown in FIG. 5. Specifically, an end surface 57 of the second shaft portion 47 is pressed against the stepped portion 54 of the mount member 39, and the mount member 39 is sandwiched between the fixing portion 40 and the second shaft portion 47. A tip end 37A of the joint 37 is located between the recessed portion 44 and the intersection B1 in the direction of the center line A2. Namely, the tip end 37A is located on a side closer to the recessed portion 44 relative to the straight line A3.

Further, as shown in FIGs. 6 and 7, a contact surface 58 that surrounds an opening end of the first support hole 52 is provided in the mount member 39. The contact surface 58 is flat and inclined in the same direction as the contact surface 45 of the fixing portion 40. When the mount member 39 is pressed against the fixing portion 40 and positioned, the mount member 39 is sandwiched between the fixing portion 40 and the joint 37 in a state where the contact surface 58 is in surface contact with the contact surface 45.

Further, a projection 59 is provided on an outer surface of the mount member 39. When the worker positions the mount member 39 to the front case 25, the worker can confirm the position of the mount member 39 in the circumferential direction of a circle centered on the center line A2 by visually checking the projection 59.

The handle 38 includes a main body 60 integrally formed of a synthetic resin and an annular flange 61 provided on the main body 60. The flange 61 protrudes outward from an outer peripheral surface of the main body 60. A shaft hole 62 is provided in the main body 60, and a shaft portion 64 of a bolt 63 is disposed in the shaft hole 62. An external thread 65 is formed in an outer peripheral surface of the shaft portion 64, and a part of the shaft portion 64 is disposed outside the main body 60. The center line A2 is common to a center line of the bolt 63, and the external thread 65 of the bolt 63 is screwed in the internal thread 51 of the joint 37.

Specifically, the handle 38 is fixed to the joint 37 by fastening the bolt 63. Note that the fixing hole 50 is filled with an adhesive to prevent loosening of the bolt 63. Further, a metal washer 66 is interposed between the joint 37 and the handle 38. The washer 66 has an annular shape, and the shaft portion 64 of the bolt 63 is inserted through the washer 66.

The holding tool 36 can impart a torque, which suppresses the rotation of the front case 25 about the axis A1, to the front case 25. The torque that can be generated by the holding tool 36 has a value corresponding to the length of the arm of the moment from the axis A1 to the handle 38. The torque that can be generated by the holding tool 36 is higher as the length of the arm of the moment is larger. For example, as shown in FIG. 2, a distance L1 from the axis A1 to the flange 61 can be grasped as the length of the arm of the moment.

The mount member 39 supports a portion of the first shaft portion 46 having no external thread 49 provided therein and a part of the second shaft portion 47 in the radial direction. Namely, the mount member 39 apparently increases a range to support the joint 37 in the direction of the center line A2. Therefore, it is possible to suppress elastic deformation of the joint 37 in the radial direction at a boundary position between the first shaft portion 46 and the second shaft portion 47.

Further, when the worker grips the handle 38 to integrally rotate the handle 38 and the joint 37, the holding tool 36 can tighten or loosen the external thread 49. Namely, the holding tool 36 can be attached to and detached from the front case 25. Therefore, the worker can attach the holding tool 36 to the front case 25 and detach the holding tool 36 from the front case 25 by rotating the handle 38 with one hand, so that the handleability and operability of the working machine 10 are improved. In addition, since the front case 25 and the joint 37 are fixed with the screw mechanism, the number of parts can be reduced.

Further, the mount member 39 is partially disposed on the outer peripheral surface of the front case 25, and there is no need to surround the outer peripheral surface of the front case 25 in the circumferential direction. Therefore, it is possible to suppress an increase in size of the working machine 10 in the radial direction about the axis A1. In addition, as compared with a configuration of a conventional working machine in which a holding tool is attached to a main body by using a ring-shaped holder, it is possible to suppress an increase in size of the working machine 10 of the present embodiment in a direction of the axis A1.

Further, the front case 25 to which the holding tool 36 is attached is an element provided to house the third planetary gear mechanism 30. Namely, it is not necessary to provide an element dedicated for fixing the holding tool 36 to the main body 11. Therefore, reduction in the number of parts of the working machine 10, reduction in weight of the working machine 10, and reduction in manufacturing cost of the working machine 10 can be realized.

In addition, in a state where the external thread 49 is loosened and the joint 37 is detached from the front case 25, the mount member 39 and the joint 37 of the holding tool 36 can be disassembled by pulling out the retainer 56 from the hole 55. Therefore, the length of the joint 37 to be used can be changed in accordance with the torque generated in the chuck 13 by preparing a plurality of types of the joint 37 having different lengths in the direction of the center line A2 and selecting the favorable joint 37. Further, when the mount member 39 is damaged, the mount member 39 can be independently replaced without replacing the front case 25 and the joint 37.

In addition, the attaching hole 41 penetrates the fixing portion 40 in the direction of the center line A2, and the recessed portions 43 and 44 are provided on both sides of the attaching hole 41. Therefore, the holding tool 36 can be attached on a right side of the front case 25 in the front view of the working machine 10 in FIG. 2. Further, the holding tool 36 can also be attached on a left side of the front case 25 in the front view of the working machine 10 in FIG. 2. Note that the holding tool 36 can be attached on the left side of the front case 25 by inserting the first shaft portion 46 into the attaching hole 41 through the recessed portion 44.

Also, the attaching hole 41 is common in both the cases where the holding tool 36 is attached on the right side of the working machine 10 and is attached on the left side of the working machine 10 in the front view. Therefore, it is not necessary to provide separate attaching holes for the cases where the holding tool 36 is attached on the right side of the working machine 10 and is attached on the left side of the working machine 10 in the front view. Accordingly, the length of the attaching hole 41 in the direction of the center line A2 can be made as short as possible.

As mentioned above, the attaching hole 41 penetrates the fixing portion 40 in the direction of the center line A2. Therefore, in a processing step of the front case 25, the attaching hole 41 can be formed by cutting the front case 25 from one direction with a drill. Accordingly, the number of steps for the processing of the front case 25 can be reduced to improve productivity, and the cost of the working machine 10 can be reduced. Further, since the attaching hole 41 penetrates the fixing portion 40 in the direction of the center line A2, the metal material constituting the front case 25 can be reduced, and the working machine 10 can be made as light as or as small as possible.

Furthermore, one of the factors to determine the fixing strength between the joint 37 and the front case 25 is a connection length between the joint 37 and the fixing portion 40 in the direction of the center line A2. Also, since the attaching hole 41 penetrates the fixing portion 40, the connection length between the joint 37 and the fixing portion 40 can be made as large as possible in the direction of the center line A2. For example, the connection length between the joint 37 and the fixing portion 40 can be set such that the tip end 37A of the joint 37 is located between the center of the attaching hole 41 in a left and right direction and the recessed portion 44 when the joint 37 is attached by moving it in the direction of the center line A2 through a first opening portion of the attaching hole 41. Here, the first opening portion is the recessed portion 43, and a second opening portion is the recessed portion 44. Further, the center of the attaching hole 41 in the left and right direction is the intersection B1 of the straight line A3 and the center line A2. Therefore, it is possible to enhance the fixing strength between the joint 37 and the front case 25.

Further, the two contact surfaces 45 provided in the fixing portion 40 are inclined with respect to the straight line A3 in the direction in which the interval in the direction of the center line A2 becomes narrower as the two contact surfaces 45 are spaced away from the straight line A1. Therefore, the height of the fixing portion 40 in the direction of the straight line A3 can be made as small as possible, and it is possible to suppress the fixing portion 40 from coming into contact with an object.

When it is assumed that inclined portions of the contact surfaces 45 of the fixing portion 40 are formed in inner surfaces of the recessed portions 43 and 44, the thickness of the first cylindrical portion 32 of the front case 25 from an inner periphery to an outer periphery is reduced in the direction of the straight line A3. As a result, when a load is applied to the first cylindrical portion 32, the first cylindrical portion 32 is easily broken. In contrast, the front case 25 of the present embodiment is provided with the contact surfaces 45 inclined outside the recessed portions 43 and 44. Namely, since the first cylindrical portion 32 is configured to have a portion with a large thickness, the first cylindrical portion 32 is less easily damaged even if a load is applied to the first cylindrical portion 32. In addition, since the contact surfaces 45 are provided in the fixing portion 40, the fixing portion 40 is less easily damaged even if the contact surface 45 hits against a wall or the like during work.

Further, the joint 37 is fixed to the front case 25 via the mount member 39. Therefore, the mount member 39 plays a role of receiving a load of the joint 37 in a direction intersecting with the center line A2. Thus, swinging of the joint 37 about the fixing portion 40 as a fulcrum can be suppressed. Furthermore, when the joint 37 is fixed to the fixing portion 40, the contact surface 45 of the fixing portion 40 and the contact surface 58 of the mount member 39 are in surface contact with each other. Namely, the contact area between the fixing portion 40 and the mount member 39 can be made as large as possible, so that the function to support the joint 37 by the mount member 39 is improved.

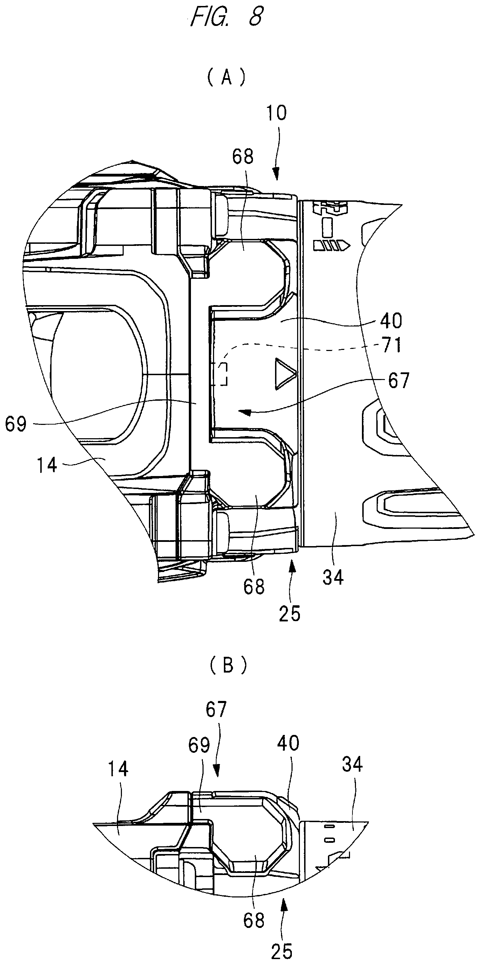

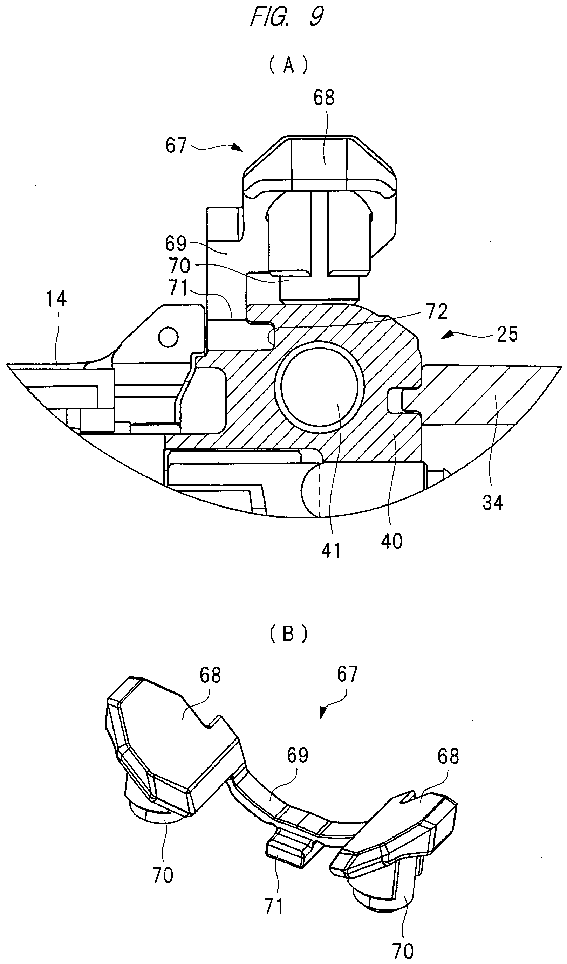

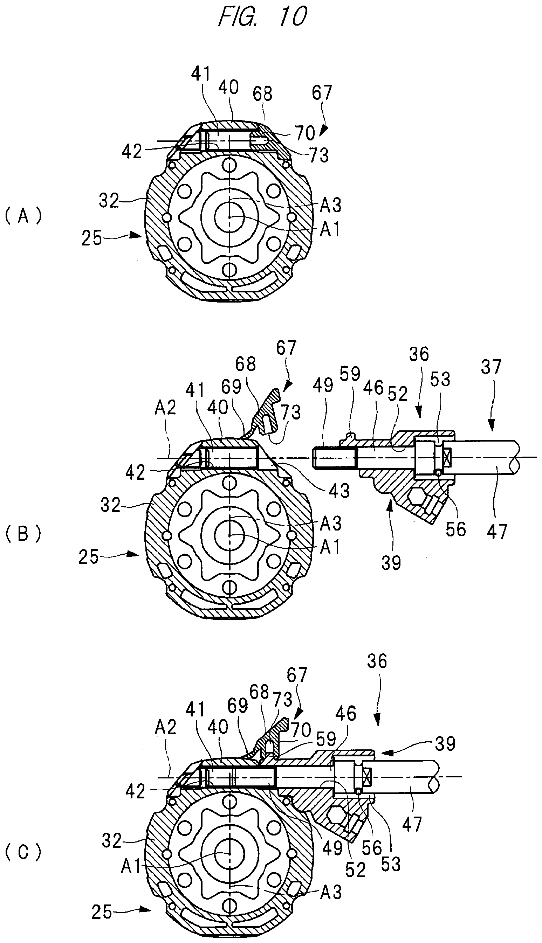

Further, the joint 37 is fixed to the front case 25 with the mount member 39 interposed between the front case 25 and the joint 37. Therefore, it is only necessary to match the shape and structure of the mount member 39 with the shape and structure of the front case 25. Namely, the joint 37 can be fixed to the front case 25 irrespective of the shape and structure of the front case 25. Further, the working machine 10 may be provided with a cap 67 shown in FIGs. 8 to 10. The cap 67 is a sealing element that blocks the attaching hole 41. The cap 67 is integrally formed of synthetic rubber and includes two gripping portions 68, a connecting portion 69 that connects the two gripping portions 68, plugs 70 respectively provided to the two gripping portions 68, and a base portion 71 provided in the connecting portion 69 as shown in FIG. 9. The connecting portion 69 is elastically deformable. A locking groove 72 is provided in the fixing portion 40 of the front case 25, and the base portion 71 is disposed in the locking groove 72. The base portion 71 is sandwiched between the fixing portion 40 of the front case 25 and the housing 14, and the cap 67 is attached to the front case 25. The plug 70 is provided with an insertion hole 73 as shown in FIG. 10(B).

When the holding tool 36 is not attached to the front case 25, the worker can insert the plugs 70 into the attaching hole 41 through the recessed portions 43 and 44 by gripping the gripping portions 68 with fingers to elastically deform the connecting portion 69. The cap 67 blocks the attaching hole 41 as shown in FIG. 10(A) so as to prevent entry of a foreign matter into the attaching hole 41. In other words, the cap 67 protects the internal thread 42. The foreign matter includes chips and dusts.

When attaching the holding tool 36 to the front case 25, the worker grips the gripping portions 68 with fingers and pulls out the plugs 70 from the attaching hole 41 as shown in FIG. 10(B). Next, the external thread 49 of the joint 37 is screwed into the internal thread 42 of the attaching hole 41, so that the holding tool 36 is fixed to the front case 25 as shown in FIG. 10(C). Then, the worker holds the gripping portions 68 with fingers and fits the projection 59 of the mount member 39 into the hole 73 of the plug 70. Even if the front case 25 vibrates during use of the working machine 10, vibration of the gripping portions 68 about the connecting portion 69 as a fulcrum can be prevented because the projection 59 is fit in the hole 73. Therefore, the worker can concentrate on the work without worrying about the presence of the cap 67. In addition, it is possible to prevent the gripping portions 68 from being separated from the connecting portion 69 due to the vibration.

Also, the base portion 71 is sandwiched between the front case 25 and the housing 14, and the cap 67 is fixed to the front case 25. Therefore, in a state where the plugs 70 are pulled out of the attaching hole 41, the cap 67 does not drop off the front case 25 and is not lost.

Note that the housing 14 may be divided into two parts including a first configuration piece and a second configuration piece along the straight line A3. Then, the configuration in which the locking grooves 72 are respectively provided in the first configuration piece and the second configuration piece and the base portion 71 is sandwiched by the first configuration piece and the second configuration piece may also adopted. Also in the configuration in which the housing 14 is divided into two parts as described above, it is possible to prevent the cap 67 from being lost.

Further, in a state where the plug 70 is inserted in the attaching hole 41 as shown in FIG. 10(A), the cap 67 is disposed between an upper end of the fixing portion 40 and the axis A1 in the direction of the straight line A3. Namely, the cap 67 does not protrude from the upper end of the fixing portion 40. Therefore, it is possible to suppress the cap 67 from coming in contact with, catching on, or rubbing on surrounding objects in a workplace, and the cap 67 can be prevented from turning over and dropping off.

Although the two gripping portions 68 are provided and the plugs 70 are respectively provided to the gripping portions 68, only one gripping portion 68 and plug 70 are shown in FIG. 10 for convenience. Further, the structure to fix the cap 67 includes a structure to fix the cap 67 with an adhesive or by crimping in addition to the structure to sandwich the cap 67 between the front case 25 and the housing 14.

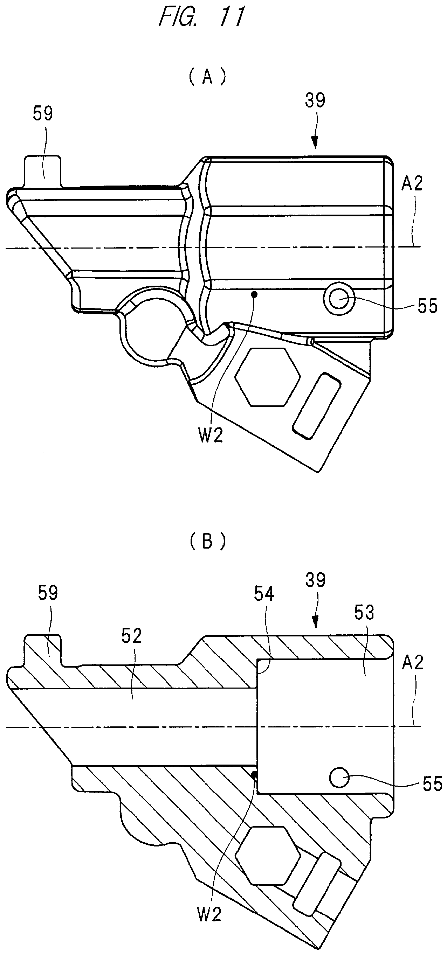

Next, the center of gravity of the working machine 10 will be described. In the side view of the working machine 10 in FIG. 3, a center of gravity W1 is in a disposition region of the trigger switch 77. In short, the center of gravity W1 is located between the housing 14 and the mounting portion 16 in the direction of the straight line A3. The center of gravity W1 is a center of gravity in a state where the battery pack 17 is attached to the mounting portion 16. Further, the position of the center of gravity of the mount member 39 alone is shown in FIG. 11. A center of gravity W2 of the mount member 39 alone is located between the axis A1 and the center line A2 of the first support hole 52 and the second support hole 53. In other words, the center line A2 is located between the projection 59 and the center of gravity W2, and the center of gravity W2 is located below the center line A2.

Therefore, when the holding tool 36 to which the mount member 39 is attached is attached to the front case 25, the projection 59 is located above the center line A2. In other words, by simply inserting the joint 37 into the first support hole 52 and the second support hole 53 and attaching the joint 37 to the mount member 39, the attaching state of the mount member 39 with respect to the joint 37 becomes a state where the projection 59 is automatically located above the center line A2 by its own weight, as shown in FIG. 10 (B) . Therefore, the work to fix the holding tool 36 to the front case 25 can be easily performed.

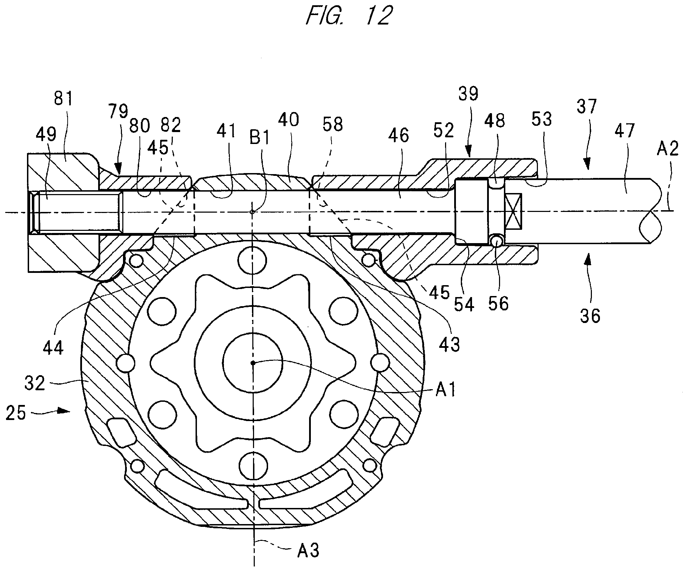

FIG. 12 shows an example of fixing the holding tool 36 to the front case 25. No internal thread 42 is provided in the inner surface of the attaching hole 41. In a state where the first shaft portion 46 of the joint 37 is inserted in the attaching hole 41, the external thread 49 provided in the first shaft portion 46 is disposed outside the attaching hole 41. A mount member 79 is provided in addition to the mount member 39. The mount member 79 has a support hole 80, and the first shaft portion 46 is disposed in the support hole 80. The mount member 79 is integrally formed of a synthetic resin. Also, a part of the first shaft portion 46 having the external thread 49 formed therein is disposed outside the support hole 80.

A nut 81 is attached to the external thread 49, and the holding tool 36 is fixed to the front case 25 by tightening the nut 81. The fixing portion 40 is sandwiched between the mount member 39 and the mount member 79 in the direction of the center line A2. Namely, the second shaft portion 47 and the nut 81 apply a compressive load in the direction of the center line A2 to the mount members 39 and 79 and the fixing portion 40. The mount member 79 has a contact surface 82, and the contact surface 82 and the contact surface 45 are in contact with each other. Namely, in a state where the nut 81 is tightened, the contact surface 82 is pressed against the contact surface 45. The contact surface 82 is inclined similarly to the contact surface 58.

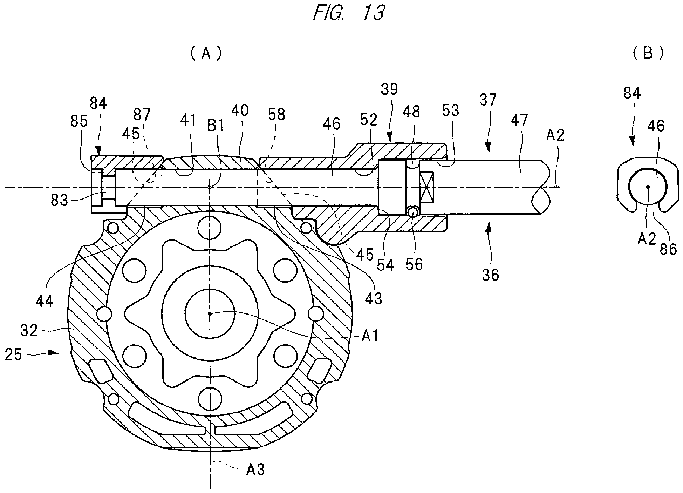

FIG. 13 shows an example of attaching the holding tool 36 to the front case 25. In the joint 37 shown in FIG. 13, no external thread 49 is provided in the first shaft portion 46. An annular groove 83 is provided in the outer peripheral surface of the first shaft portion 46, and the part of the first shaft portion 46 having the groove 83 formed therein is located outside the attaching hole 41 in a state where the first shaft portion 46 is inserted in the attaching hole 41.

Further, a mount member 84 to be attached to the first shaft portion 46 is provided. The mount member 84 has a C shape in a plan view intersecting with the center line A2. Namely, the mount member 84 has a cutout 86. Further, a projection 85 is provided on an inner peripheral surface of the mount member 84. The projection 85 protrudes inward in the radial direction from the inner peripheral surface of the mount member 84. The mount member 84 is disposed outside the attaching hole 41. The mount member 84 has a contact surface 87. The contact surface 87 is configured similarly to the contact surface 58.

The mount member 84 is integrally formed of a synthetic resin, and when the mount member 84 is pressed against the first shaft portion 46, the cutout 86 expands and the mount member 84 is attached to the first shaft portion 46. When the mount member 84 is attached to the first shaft portion 46, the projection 85 is located in the groove 83. Namely, the joint 37 and the mount member 84 are positioned and fixed in the direction of the center line A2 by an engagement force between the projection 85 and the first shaft portion 46. Further, in a state where the mount member 84 is attached to the first shaft portion 46, the contact surface 87 of the mount member 84 is pressed against the contact surface 45. Namely, the fixing portion 40 is sandwiched between the mount member 39 and the mount member 84, and the holding tool 36 is fixed to the front case 25.

In addition, the size of the cutout 86 is less than the outer diameter of the first shaft portion 46. Therefore, the mount member 84 will not come off the first shaft portion 46 unless the mount member 84 is elastically deformed. Further, by moving the mount member 84 in the radial direction with respect to the first shaft portion 46 and elastically deforming the mount member 84, the mount member 84 can be attached to and detached from the first shaft portion 46. Namely, the mount member 84 can be attached to and detached from the first shaft portion 46 by one motion, and the work to attach and detach the holding tool 36 to and from the front case 25 is facilitated.

In the example of attaching the holding tool 36 shown in FIGs. 12 and 13, it is possible to block the attaching hole 41 with the cap 67 described with reference to FIGs. 8 to 11 in a state where the holding tool 36 is not attached to the front case 25. In addition, the attaching hole 41 penetrates the fixing portion 40 and the holding tool 36 is attached via the mount member 39 also in FIGs. 12 and 13, and thus the effects described with reference to FIGs. 1 to 7 can be obtained.

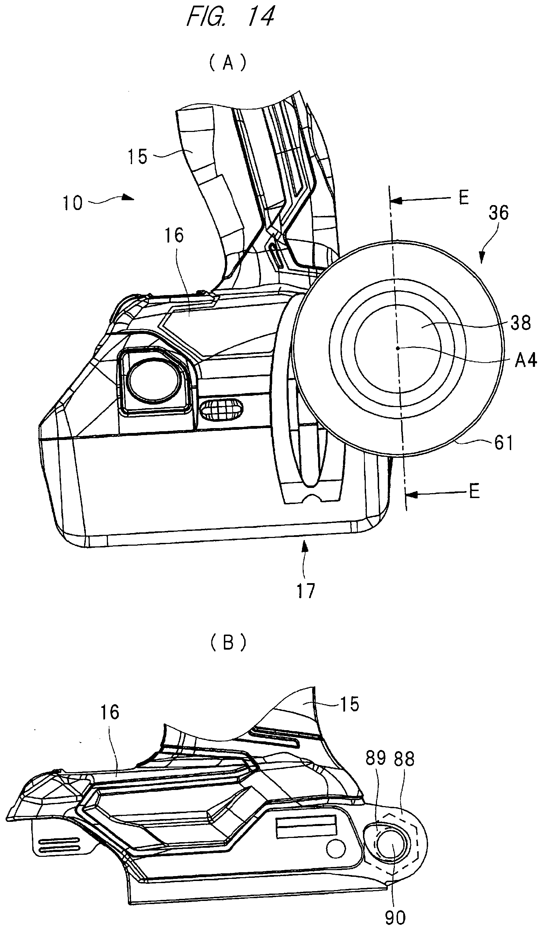

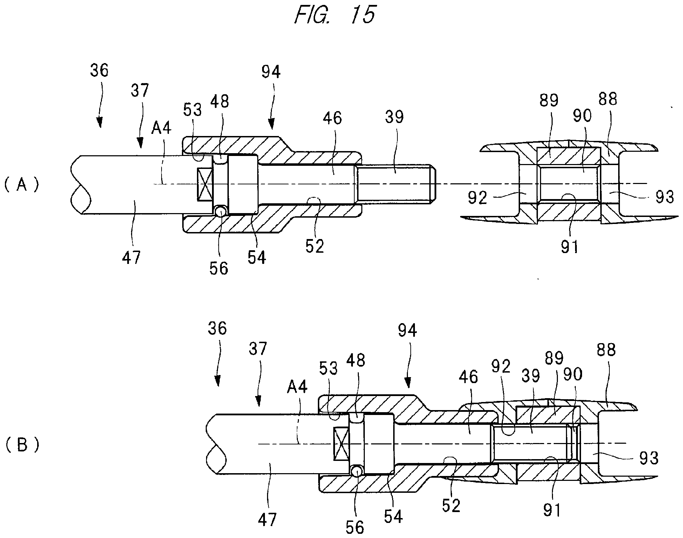

FIG. 14(A) shows an example in which the holding tool 36 is attached to the mounting portion 16. Note that the example of attaching the holding tool 36 to the mounting portion 16 is shown by the two-dot chain lines in FIG. 2. As shown in FIG. 14(B), a fixing portion 88 is provided in the mounting portion 16. A nut 89 is fixed to the fixing portion 88, and an internal thread 91 is provided in an inner surface of an attaching hole 90 of the nut 89. The fixing portion 88 has opening portions 92 and 93 disposed on both sides of the attaching hole 90. The holding tool 36 is attached to the fixing portion 88 via a mount member 94 shown in FIGs. 15(A) and 15(B). The mount member 94 is configured similarly to the mount member 39 shown in FIGs. 5 and 6. The mount member 94 shown in FIG. 15 does not have the contact surface 58.

When the holding tool 36 in FIG. 14 is attached to the mounting portion 16, the nut 89 and the holding tool 36 are concentrically positioned as shown in FIG. 15(A), and the first shaft portion 46 is inserted into the attaching hole 90 through the opening portion 92, and the handle 38 is rotated. Then, the external thread 49 of the first shaft portion 46 is screwed into the internal thread 91 of the nut 89. Further, when the mount member 94 is pinched between the second shaft portion 47 and the fixing portion 88 as shown in FIG. 15(B), tightening of the joint 37 is completed and the holding tool 36 is fixed to the mounting portion 16.

When the holding tool 36 is fixed to the mounting portion 16, a center line A4 of the joint 37 is parallel to the center line A2. In FIG. 2, the center line A4 and the straight line A3 intersect at an intersection B2. Further, the distance L1 from the axis A1 to the flange 61 when the holding tool 36 is fixed to the mounting portion 16 is equal to the distance L1 from the axis A1 to the flange 61 when the holding tool 36 is fixed to the front case 25. In addition, the distance from the axis A1 to the intersection B2 is longer than the distance from the axis A1 to the intersection B1. Namely, when the main body 11 vibrates around the axis A1, the amount of vibration generated at the intersection B2 is larger than the amount of vibration generated at the intersection B1. Therefore, it is possible to effectively suppress the vibration of the main body 11 by attaching the holding tool 36 to the mounting portion 16. The vibration of the main body 11 can be grasped as rotation of the main body 11, and a vibration force of the main body 11 can be grasped as a rotation amount of the main body 11.

Further, a distance L2 from the straight line A3 to the tip end of the handle 38 when the holding tool 36 is attached to the mounting portion 16 is shorter than a distance L3 from the straight line A3 to the tip end of the handle 38 when the holding tool 36 is attached to the front case 25. Therefore, when the holding tool 36 is attached to the mounting portion 16, the handle 38 can be prevented from coming in contact with an object.

Note that FIG. 15 shows an example in which the holding tool 36 is fixed to the mounting portion 16 by inserting the first shaft portion 46 into the opening portion 92. Meanwhile, in the working machine 10 in FIG. 14, it is also possible to fix the holding tool 36 to the mounting portion 16 by inserting the first shaft portion 46 shown in FIG. 15 into the opening portion 93. Furthermore, in the working machine 10, the attaching hole 90 may be provided in the mounting portion 16, and the attaching hole 41 may be provided in the front case 25. The holding tool 36 is attached to either the front case 25 or the mounting portion 16. In other words, the holding tool 36 is not attached to both the mounting portion 16 and the front case 25. Note that the attaching hole 41 may be blocked with the cap 67 in a state where the holding tool 36 is not attached to the front case 25 shown in FIG. 12 or 13. Further, the attaching hole 90 may be blocked with a sealing member in a state where the holding tool 36 is not attached to the fixing portion 88 in FIG. 15.

Correspondence relation between the configuration described in each embodiment and the configuration of the present invention is as follows. The electric motor 12 corresponds to a motor of the present invention, the working machine 10 corresponds to a working machine of the present invention, the gearbox 27 corresponds to a transmission mechanism of the present invention, and the front case 25 corresponds to a case of the present invention. The holding tool 36 corresponds to a holding tool of the present invention, the attaching hole 41 corresponds to an attaching hole of the present invention, the recessed portions 43 and 44 and the opening portions 92 and 93 correspond to a first opening portion and a second opening portion of the present invention, the joint 37 corresponds to a shaft portion of the present invention, and the contact surface 45 corresponds to an attaching surface of the present invention.

Further, the tip end 37A of the joint 37 corresponds to "a tip end of the shaft portion" of the present invention, the intersection B1 corresponds to "a center in a center line direction" of the present invention, the contact surface 45 corresponds to a contact surface of the present invention, and the mount members 39 and 79 correspond to intermediate members of the present invention. The first support hole 52 and the second support hole 53 correspond to support holes of the present invention, the external thread 49 and the internal thread 42 correspond to a screw mechanism of the present invention, and the retainer 56 corresponds to a retainer of the present invention.

The grip 15 corresponds to a grip of the present invention, the direction of the straight line A3 corresponds to a "direction intersecting with an axis" of the present invention, and the battery pack 17 corresponds to a power supply mechanism of the present invention. The cap 67 corresponds to a sealing member of the present invention, the housing 14 corresponds to a housing of the present invention, the base portion 71 corresponds to a base portion of the present invention, the connecting portion 69 corresponds to a connecting portion of the present invention, the plug 70 corresponds to a plug of the present invention, the projection 59 corresponds to a supporting portion of the present invention, and the center of gravity W2 corresponds to "a center of gravity of the intermediate member" of the present invention.

The working machine of the present invention is not limited to the above embodiment. For example, the working machine may include a driver that rotates a working tool to tighten or loosen a screw member or a bolt and a drill that cuts a mating member or bores a hole with a working tool. Further, the working machine described in the embodiment is a working machine having a first structure that imparts a rotational force to the working tool. The working machine may include a working machine having a second structure and a working machine having a third structure. The working machine having the second structure can apply a rotational force and a striking force in the rotating direction to the working tool. The working machine having the third structure can apply a rotational force and a striking force in an axial direction to the working tool.

The transmission mechanism is a mechanism that transmits the rotational force of the motor to the working tool, and the transmission mechanism includes a gear transmission mechanism, a winding transmission mechanism, and a friction transmission mechanism. The motor includes an electric motor, a hydraulic motor, a pneumatic motor, and an engine. A power supply that supplies the electric power to the electric motor includes a DC power supply and an AC power supply. The power supply mechanism attached to and detached from the grip includes a battery pack as the DC power supply and an adapter connected to the AC power supply. The working machine includes a structure in which a power cable attached to the grip is connected to the DC power supply or the AC power supply provided separately from the working machine. Namely, the power supply mechanism includes a power supply itself and a path for supplying electric power of the power supply to the electric motor.

In the embodiment of the working machine, the connection structure between the joint and the handle includes a structure in which an external thread provided in the joint is screwed into an internal thread provided in the handle. Further, the working machine 10 described in the embodiment is an example in which the smaller angle formed between the straight line A3 and the center line A2 is 90 degrees as shown in FIG. 2. The working machine includes a structure in which the smaller angle formed between the straight line A3 and the center line A2 is different from 90 degrees. For example, the working machine includes a structure in which the straight line A3 and the center line A2 overlap in the front view of the working machine shown in FIG. 2. The working machine of this structure has a structure in which the power cable attached to the grip is connected to the AC power supply.

Furthermore, the working machine includes a structure in which the angle formed between the straight line A3 and the center line A2 is 180 degrees in the front view of the working machine shown in FIG. 2. In the present invention, the plan view intersecting with the axis that is a rotation center of the working tool includes a plan view perpendicular to the axis and a plan view not perpendicular to the axis. Further, the working machine includes a structure in which the holding tool is attached to the case without using the intermediate member. Also, a holding tool obtained by integrating the holding tool and the intermediate member described in the embodiment may be provided.

### REFERENCE SIGNS LIST

- 25: Front case
- 36: Holding tool
- 41: Attaching hole
- A1: Axis

## Claims

1. A working machine (10) comprising:
a tool support (13) to which a working tool can be detachably attached;
a rotatable motor (12);
a transmission mechanism (27) disposed between the motor (12) and the tool support (13);
a case (25) in which the transmission mechanism (27) is stored; and
a holding tool (36) that is attached so as to protrude from an outer surface of the case (25) and is gripped by a worker wherein the case (25) has an attaching hole (41) to which the holding tool (36) is attached,
the attaching hole (41) penetrates the case (25) in plan view intersecting with an axis (A1) that is a rotation center of the tool support (13),
a first opening portion (43) and a second opening portion (44) are formed on both sides of the attaching hole (41) in a center line (A2) direction,
**characterised in that** the holding tool (36) includes a shaft portion (37) to be inserted into the attaching hole (41), and
a tip end (37A) of the shaft portion (37) inserted into the attaching hole (41) through the first opening portion (43) is located between a center (B1) in the center line (A2) direction and the second opening portion (44).

## Patentansprüche

1. Arbeitsmaschine (10), die Folgendes aufweist:
einen Werkzeugträger (13), an den ein Arbeitswerkzeug lösbar angebracht werden kann;
einen drehbaren Motor (12);
einen Übertragungsmechanismus (27), der zwischen dem Motor (12) und dem Werkzeugträger (13) angeordnet ist;
ein Gehäuse (25), in dem der Übertragungsmechanismus (27) gelagert ist; und
ein Haltewerkzeug (36), das angebracht ist, damit es aus einer Außenfläche des Gehäuses (25) herausragt und von einem Arbeiter gegriffen wird;
wobei das Gehäuse (25) ein Befestigungsloch (41) aufweist, an dem das Haltewerkzeug (36) befestigt ist,
wobei das Befestigungsloch (41) in das Gehäuse (25) eindringt, in der Draufsicht eine Achse (A1) schneidend, die ein Rotationszentrum des Werkzeugträgers (13) ist;
ein erster Öffnungsabschnitt (43) und ein zweiter Öffnungsabschnitt (44) auf beiden Seiten des Befestigungslochs (41) in einer Mittellinien (A2)-richtung gebildet sind,
**dadurch gekennzeichnet, dass** das Haltewerkzeug (36) einen Schaftabschnitt (37) aufweist, der in das Befestigungsloch (41) einzuführen ist, und
ein Kopfende (37A) des Schaftabschnitts (37), das durch den ersten Öffnungsabschnitt (43) in das Befestigungsloch (41) eingeführt ist, zwischen einer Mitte (B1) in der Mittellinien (A2)-richtung und dem zweiten Öffnungsabschnitt (44) angeordnet ist.

## Revendications

1. Machine de travail (10) comprenant :
un support d'outil (13) auquel un outil de travail peut être fixé de manière détachable ;
un moteur rotatif (12) ;
un mécanisme de transmission (27) disposé entre le moteur (12) et le support d'outil (13) ;
un boîtier (25) dans lequel le mécanisme de transmission (27) est stocké ; et
un outil de maintien (36) qui est fixé de manière à faire saillie d'une surface extérieure du boîtier (25) et est saisi par un travailleur, dans laquelle
le boîtier (25) comporte un trou de fixation (41) auquel l'outil de maintien (36) est fixé,
le trou de fixation (41) pénètre dans le boîtier (25) dans une vue en plan coupant un axe (A1) qui est un centre de rotation du support d'outil (13),
une première partie d'ouverture (43) et une deuxième partie d'ouverture (44) sont formées des deux côtés du trou de fixation (41) dans une direction de ligne centrale (A2),
**caractérisée en ce que**
l'outil de maintien (36) inclut une partie tige (37) à insérer dans le trou de fixation (41), et
un embout (37A) de la partie tige (37) inséré dans le trou de fixation (41) à travers la première partie d'ouverture (43) est situé entre un centre (B1) dans la direction de ligne centrale (A2) et la deuxième partie d'ouverture (44).
